# FASCICULE DE BREVET EUROPEEN

(11) **EP 1 855 792 B1**
(45) Date de publication et mention de la délivrance du brevet: **30.05.2012**
(21) Numéro de dépôt: 06726215.4
(22) Date de dépôt: 02.03.2006
(51) Int. Cl.: B01J 13/04, B01J 13/22

(54) **CAPSULES PLURIMEMBRANAIRES DE POLYSACCHARIDES ET EN PARTICULIER DE CHITOSANE ET LEUR PROCEDE DE PREPARATION**
POLYSACCHARIDKAPSELN MIT MEHREREN MEMBRANEN, INSBESONDERE AUS CHITOSAN, UND HERSTELLUNGSVERFAHREN DAFÜR
MULTIPLE-MEMBRANE POLYSACCHARIDE CAPSULES AND IN PARTICULAR OF CHITOSAN AND METHOD FOR PREPARING SAME

(30) Priorité: 04.03.2005 FR 0502189
(43) Date de publication de la demande: 21.11.2007
(73) Titulaire: Université Claude Bernard Lyon I, 69622 Villeurbanne Cedex (FR); Centre National de la Recherche Scientifique, 75794 Paris Cedex 16 (FR)
(72) Inventeur: DOMARD, ALAIN, F-69006 Lyon (FR); VITON, Christophe, F-69100 Villeurbanne (FR); LADET, Sebastien, F-69006 Lyon (FR)
(74) Mandataire: Sarlin, Laure V.
(86) Numéro de dépôt international: PCT/FR2006/050191
(87) Numéro de publication internationale: WO 2006/092540

(56) Documents cités:
- EP-A- 0 301 777
- US-A- 6 165 503

## Description

La présente invention concerne des capsules plurimembranaires de polysaccharides, en particulier de chitosane, utiles notamment pour des applications biomédicales et biotechnologiques en général. Capsules similaires sont décrits dans EP-A-0 301 777.

Les hydrogels de biopolymeres présentent des propriétés biologiques intéressantes (R. A. A. Muzzarelli et al. Biological activity of chitosane : ultrastructural study, Biomaterials 9(3), 247-252, 1988 ; P. Sorlier, Université de Lyon, Recherche des anticorps anti-chitosane. Applications aux biomatériaux, 12/12/2002 ; C. Cid, Preparation and Characterization of Chitosan Films : Application in Cell Culture.; Peter, M. G.; Domard, A. a. M. R. A. A. E., editors; 2000; pp. 93-97) et sont utilisés dans diverses applications, comme l'encapsulation de principe actif permettant d'obtenir une libération contrôlée, et également d'améliorer la biodisponibilité de certaines drogues (U. Gaur et al. Tumour targeted delivery of encapsulated dextran-doxorubicin conjugate using chitosan nanoparticuless as carrier, Journal of controlled release 72, 317-323, 2001; C. L. Bell et N. A. Peppas, Modulation of drug permeation through interpolymer complexed hydrogels for drug delivery applications, Journal of controlled release 39, 201-207, 1996). Ils sont également utilisés depuis quelques années dans le domaine de l'ingénierie tissulaire (R. A. A. Muzzarelli, Chitin and the human body, J. André Publisher : 1998, pp. 448-461 ; J. L. Drury, Hydrogels for tissue engineering : scaffold design varibles and applications, Biomaterials 24, 4337-4351, 2003), notamment comme des matrices synthétiques extracellulaires, afin d'organiser les cellules dans un réseau tri-dimensionnel et donner ainsi au milieu biologique les stimuli qui dirigent la croissance et la formation du tissu désiré.

Parmi les polysaccharides ionisables, le chitosane est un composé connu dans l'état de la technique, notamment pour ses propriétés de biocompatibilité, de bio-résorbabilité et aussi pour ses propriétés anti-adhésives et cicatrisantes. Ces propriétés exceptionnelles ont été utilisées, en médecine et en chirurgie, entre autres.

Le chitosane est une fibre d'origine naturelle biodégradable, obtenue après désacétylation de la chitine. La chitine est un biopolymère de haut poids moléculaire, non-toxique et biodégradable, et c'est, avec la cellulose, le polysaccharide le plus répandu dans la nature. La chitine est constituée d'une chaîne linéaire dont la structure contient des monomères de type glucosamine (GIcN) et N-acétylglucosamine (GIcNAc) liés par une liaison β,(1->4). L'extraction de la chitine à partir de carapaces de crustacés et/ou de calmars, se fait par voie chimique, puis la transformation par désacétylation de la chitine dans de la soude permet d'obtenir du chitosane. Le chitosane est donc obtenu en enlevant suffisamment de groupements acétyle pour permettre à la macromolécule d'être soluble dans la plupart des acides dilués. Cette opération, appelée désacétylation, libère les groupes amines et confère au chitosane une nature "cationique " à pH < 7. De par sa structure chimique intrinsèque, un biomatériau à base de chitosane est parfaitement compatible avec les milieux biologiques et sa haute tolérance biologique est connue depuis longtemps (il ne présente aucune réaction inflammatoire importante ou allergique après transplantation, ni aucune réponse systémique). Le chitosane est complètement biodégradable.

De part leur biocompatibilité avec les tissus humains et leur propriété cicatrisante, le chitosane et ses dérivés ont démontré leur efficacité sous diverses formes physiques telles que des gels, poudres ou films, dans divers produits tels que des pansements, emplâtres, peau artificielle, pansement cornéen, fils de suture en chirurgie qui se résorbent naturellement après cicatrisation, mais aussi dans la réparation osseuse ou en chirurgie dentaire, dans les implants ou dans la cicatrisation des gencives, dans des lentilles de contact bien tolérées.

Un but de la présente invention est de proposer un procédé simple, rapide, peu couteux et facilement industrialisable permettant de préparer des capsules plurimembranaires à base de polysaccharides et, en particulier de chitosane. De telles capsules offrent de nombreuses applications, notamment dans l'encapsulation de principes actifs, la régénération de tissus lésés.

Dans ce contexte, la présente invention a pour objet un procédé de préparation de capsules plurimembranaires formées d'une succession de membranes non solidaires et constituées d'un même polysaccharide ionisable, sous forme d'hydrogel physique, comprenant les étapes successives suivantes consistant à :
a) former un hydrogel physique d'un polysaccharide ionisable, sous forme cationique ou anionique, dans un moule de la forme adaptée à la forme souhaitée pour la capsule,
b) immerger l'hydrogel dans un bain alcalin dans le cas d'un polysaccharide cationique, ou acide dans le cas d'un polysaccharide anionique, pendant un temps d'immersion donné, puis le laisser reposer hors du bain pendant un temps de repos donné, de façon à obtenir une première membrane,
c) répéter l'étape b), autant de fois que de membranes supplémentaires souhaitées, pour former des membranes successives de l'extérieur vers l'intérieur de la capsule.

L'invention a également pour objet les capsules susceptibles d'être obtenues selon un tel procédé. Des capsules conformes à l'invention sont formées d'une succession de membranes non solidaires, pouvant glisser les unes par rapport aux autres, constituées d'un même polysaccharide ionisable, sous forme d'hydrogel.

Avant de décrire plus en détail l'invention, certaines définitions des termes utilisés vont être données.

Par hydrogel, on entend une masse visco-élastique comportant au moins 80% en masse, de préférence au moins 90%, d'eau. Il existe deux catégories d'hydrogels : les hydrogels chimiques et les hydrogels physiques. Les hydrogels chimiques présentent des noeuds de réticulation faisant intervenir des liaisons covalentes. Dans les hydrogels physiques, les interactions sont de types ioniques, électrostatiques, de complexation avec les métaux, liaison hydrogène et/ou interactions hydrophobes. Dans le cas des membranes formées d'hydrogel physique, conformes à l'invention, les interactions sont de type liaison hydrogène et interactions hydrophobes.

Par polysaccharides, on entend des enchaînements de sucres divers, liés entre eux par des liaisons glycosidiques. Un polysaccharide contient n unités mono-saccharidiques identiques ou différentes. En particulier, les polysaccharides utilisables dans le cadre de l'invention contiennent, par exemple des unités hexoses ionisables, dérivées des unités choisies notamment parmi l'acide D-glucuronique, l'acide D-galacturonique, l'acide D-mannuronique, la glucosamine, la galactosamine, les dérivés de galactosulfates et sulfates de N-acétylglucosamine et de N-acétylgalactosamine. Dans la suite, on nommera « polysaccharides anioniques », les polysaccharides ionisables sous forme anionique et « polysaccharides cationiques », les polysaccharides ionisables sous forme cationique. A titre d'exemple de polysaccharides anioniques, on peut citer les polymères suivants : carraghenanes, alginates, chondroïtine sulfate, acide hyaluronique, kératane sulfates, dermatane sulfates. A titre d'exemple de polysaccharides cationiques, on peut citer le chitosane, les polygalactosamines.

Par capsules, on entend un volume fermé, également nommé coeur, délimité par au moins une membrane jouant le rôle d'enveloppe. De telles capsules peuvent être de n'importe quelle forme, par exemple cylindrique, parallélépipédique, sphérique ou ovoïde. Par capsule plurimembranaire, on entend une capsule délimitée par au moins deux membranes successives. Les capsules de la présente invention peuvent présenter n'importe quelle dimension, par exemple une dimension moyenne comprise entre quelques nanomètres et plusieurs centimètres. Les membranes constitutives, quant à elles, présentent une épaisseur moyenne liée, notamment, à la dimension de la capsule et au nombre de membranes.

La présente invention a pour objet un procédé de préparation de capsules plurimembranaires constituées d'un hydrogel d'un polysaccharide ionisable. Les polysaccharides ionisables utilisés sont avantageusement des polysaccharides naturels biodégradables. Le chitosane et ses dérivés sont préférés au sens de l'invention. Le chitosane est obtenu par désacétylation de la chitine en milieu alcalin (Robert GAF Chitin Chemistry, Macmillan Press Ltd Ed., London, 1992), polymère de structure des exosquelettes des arthropodes (A. Domard et G. Chaussard ; New Approach in the Study of the Production of Chitosan from Squid Pens: Kinetics, Thermodynamic and Structural Aspects. In Adv. Chitin Sc. 5, 1-5. 2002 ; K. Kurita et al. ; Squid Chitin as a Potential Alternative Chitin Source : Deacetylation Behavior and Characteristic Properties. J. Polym. Sci. Part A 31, 485-491. 1993), des endosquelettes des céphalopodes (H.-M. Cauchie ; An Attempt to Estimate Crustacean Chitin Production in the Hydrosphere. In Adv. Chitin Sci. 2, 32-39. 1997) ou encore des parois cellulaires de certains champignons ou algues. Par conséquent, hormis dans les cas où le degré d'acétylation est de 0%, le chitosane est un copolymère des deux monomères suivants : le 2-acétamido-2-désoxy-D-glucopyranose et le 2-amino-2-désoxy-D-glucopyranose liés par une liaison glycosidiques β,(1->4).

La première étape a) du procédé de l'invention consiste en la formation d'un hydrogel du polysaccharide ionisable sélectionné.

De façon avantageuse, on utilisera des hydrogels physiques de chitosane. La formation de tels hydrogels est, par exemple décrite dans les publications suivantes, auxquelles on pourra se référer (A. Montembault; C. Viton et A. Domard dans Physico-chemical studies of gelation of chitosan in a hydroalcoholic medium. Biomaterials, 28(8), 933-943, 2004. et Rheometric study of the gelation of chitosan in a hydroalcoholic medium. Biomaterials, 26(14), 1633-1643, 2004). L'hydrogel est formé par dissolution du chitosane dans une solution aqueuse acide, par exemple d'acide chlorhydrique, de façon à obtenir un pourcentage en masse de chitosane dans la solution aqueuse, de préférence compris entre 1 et 2,5%. Apres dissolution complète du chitosane, un alcool, par exemple le 1,2-propandiol, est ajouté à la solution obtenue. La quantité en masse d'alcool introduite est avantageusement identique à la quantité en masse de solution aqueuse acide utilisée. La solution est homogénéisée, par exemple, sous agitation, puis est versée dans un moule de taille et de forme préalablement choisies suivant l'application visée pour la capsule qui va être formée. La gélification est ensuite réalisée à une température comprise entre 30 et 70 °C, avantageusement de l'ordre de 50°C, par exemple en positionnant le moule dans un four. Le temps de gélification dépend de la concentration en chitosane de la solution de départ, mais également du degré d'acétylation et de la masse molaire du chitosane, de la température de gélification, de la quantité de solution disposée dans le moule et enfin du rapport hauteur/surface du moule. On comprend donc bien qu'à la fin de la gélification, la totalité de la solution introduite dans le moule a gélifié en masse. La concentration en polymère du gel obtenu est généralement supérieure au double de la concentration en polymère initialement contenue dans la solution. Au final, l'hydrogel formé à l'étape a) contient au moins 0,5% en masse de chitosane et préférentiellement de 2 à 5 % en masse de chitosane. La concentration maximum de chitosane pouvant être solubilisé dans un milieu faiblement acide est fonction de sa masse molaire. Il est donc possible d'augmenter cette concentration maximum, si l'on diminue la masse molaire du chitosane.

De façon avantageuse, le chitosane utilisé présente :
- une masse molaire supérieure à 10 000g/mol, de préférence comprise dans la gamme allant de 200 000 à 1 000 000g/mol,
- un degré d'acétylation compris entre 0 et 70%, de préférence compris dans la gamme allant de 0 à 50%, et préférentiellement compris dans la gamme allant de 2 à 50%. Le degré d'acétylation influe sur la résorbabilité du chitosane, lorsque celui-ci est implanté dans un organisme. En effet, plus le degré d'acétylation croît, plus la cinétique de biodégradation et de bio-résorption est élevée. Celui-ci sera donc choisi en fonction de l'application visée.

De façon analogue, on pourra former un hydrogel physique d'autres polysaccharides cationiques, par interaction ionique. Dans le cas des polysaccharides anioniques, le polymère sera dissout en milieu basique.

La seconde étape b) consiste à plonger, pendant un temps donné **t1** l'hydrogel formé dans un bain acide ou alcalin, en fonction de la nature, anionique ou cationique respectivement, du polysaccharide utilisé. Le bain peut être une solution organique ou, de préférence une solution aqueuse. Cette immersion est suivie d'une phase de repos cinétique, en sortant l'hydrogel hors du bain. Cette phase de repos, pendant un temps **t2** donné, consiste à laisser reposer l'hydrogel sur un support et/ou éventuellement à le plonger dans de l'eau. La membrane est formée par neutralisation de l'hydrogel formé à l'étape a), et densification de ce dernier, par condensation physique des chaînes polymères.

Dans le cas de polysaccharides cationiques, comme le chitosane, le bain est basique et la base utilisée a généralement, un pKa supérieur ou égal à 8, de préférence compris dans la gamme allant de 11 à 14. Le pKa de la base utilisée joue un rôle important dans la formation des membranes. De préférence, on utilisera un bain alcalin constitué d'une solution aqueuse de soude, de préférence à raison de plus de 0,1% en masse et préférentiellement de 2 à 4% en masse de soude. Cette étape b) permet de former une première membrane, nommée membrane principale, qui va constituer l'enveloppe externe de la capsule. La concentration du milieu alcalin est un paramètre déterminant pour la formation des membranes, mais également pour leur densité en polysaccharide et donc pour leurs propriétés mécaniques. L'homme du métier ajustera cette concentration du milieu alcalin, en fonction du pKa de la base utilisée, mais également de la concentration en polysaccharide de l'hydrogel.

L'étape c) consiste à recommencer cette étape b), à savoir tremper l'hydrogel dans une solution basique (dans le cas d'un polysaccharide cationique, ou acide dans le cas d'un polysaccharide anionique) pendant un temps **t1**, puis sortir l'hydrogel pour le laisser au repos, par exemple sur une boite de pétri, pendant un temps **t2**, autant de fois que l'on désire obtenir de membrane. On forme ainsi des membranes successives, nommées membranes secondaires, de l'extérieur vers l'intérieur de la capsule. Il peut être avantageux de rajouter dans la phase de repos, une immersion dans un bain de lavage à l'eau distillée, par exemple, lorsque la concentration de l'hydrogel en polysaccharide dépasse les 5% notamment.

Une fois le nombre de membranes souhaitées atteint, la capsule mutlimembranaire est rincée, par exemple à l'eau distillée pendant plusieurs heures, afin de revenir à pH neutre. Dans le cas d'un hydrogel de chitosane préparé comme décrit précédemment, ce rinçage permet également d'éliminer le 1,2-propandiol résiduel. On obtient ainsi une succession de membranes empilées les unes sur les autres, mais non liées les unes aux autres, c'est-à-dire pouvant glisser librement l'une par rapport à l'autre.

Le choix du temps **t1** permet de réguler l'épaisseur des membranes, principales et secondaires, obtenues. Plus le temps **t1** est long et plus l'épaisseur de la membrane principale augmente. Pendant le temps **t2** de repos, il y a densification de la membrane.

Il est également possible d'utiliser des temps **t1** et **t2** différents dans les différentes étapes successives b) et c). Le procédé selon l'invention permet de préparer des capsules multimembranaires, de façon reproductible, avec un nombre et une épaisseur de membranes contrôlés. Les membranes successives obtenues sont constituées d'un même polysaccharide et peuvent glisser les unes par rapport aux autres. De façon avantageuse, elles présenteront toutes une épaisseur sensiblement identique.

Selon une variante de réalisation, la ou les étapes c) successives sont suivies d'une immersion de la capsule plurimembranaire obtenue dans un bain alcalin pendant un temps suffisant, par exemple pendant 12 heures, pour obtenir une neutralisation du coeur gélifié de polysaccharide. Au contraire, si la capsule est lavée prématurément, le coeur gélifié est resolubilisé et on obtient alors un coeur liquide visqueux qui peut être évidé avec une seringue.

Il est également possible de vider la capsule plurimembranaire obtenue de son coeur liquide, et éventuellement la reremplir avec un liquide ou gel d'intérêt. L'évidement et le remplissage peuvent être effectués avec une seringue.

En fonction de l'application, la capsule peut alors être remplie avec différents matériaux, comme un gel ou une solution visqueuse de biopolymère, de différents principes actifs d'intérêt, des cellules vivantes, ainsi que leur milieu de culture etc....

Les capsules selon l'invention peuvent, notamment, être utilisées pour l'encapsulation de différents principes actifs, à activité thérapeutique, tels que des enzymes, hormones, médicaments.

Les capsules plurimembranaires de chitosane selon l'invention présentent des propriétés bio-stimulantes dues, notamment, aux propriétés biologiques du polysaccharide utilisé. Elles contribuent à la migration cellulaire, à la production de matrice extracellulaire, à la prolifération des cellules et à la régénération finale d'un tissu semblable au tissu natif.

De part leur structure en feuillets, susceptibles de glisser les uns par rapport aux autres, elles sont particulièrement intéressantes. Il est également possible dans des applications liées à la régénération de tissus notamment, d'utiliser des systèmes de feuillets successifs obtenus après découpage d'une capsule telle que précédemment définie.

Les exemples ci-après illustrent l'invention mais n'on nullement un caractère limitatif.

### Exemple 1

### Préparation d'une capsule avec 7 membranes successives et un coeur gélifié

### 1-Formation de l'hydrogel physique de chitosane :

Une solution aqueuse d'acide chlorhydrique est préparée en mélangeant 25,9 g d'eau distillée désionisée et 0,761 g d'acide chlorhydrique (RP). 1,35 g de chitosane de masse molaire 500 000 g.mol⁻¹ et de degré d'acétylation égal à 2,5% est solubilisé, sous agitation mécanique, dans la solution aqueuse d'acide chlorhydrique préparée précédemment. Apres 4 heures d'agitation, 25,9 g de 1,2-propanediol (RP) sont ajoutés.

Après homogénéisation sous agitation mécanique de ce mélange, on introduit 6 g exactement de cette solution dans chaque boite de Pétri, au nombre de 8 et présentant environ 3 cm de diamètre. Les 8 boites de pétri sont placées dans une l'étuve thermostatée au préalable à 50 °C, pendant 50 h, puis sorties.

### 2-Elaboration des capsules multimembranaires :

Une solution aqueuse de soude à 1 mol/L est préparée en mélangeant 40 g de soude dans un litre d'eau distillée désionisée.

Les gels sont démoulés des boites de pétri.

Un gel est alors plongé pendant 5 minutes dans un bécher contenant 100 ml de la solution aqueuse de soude préparée ci-dessus. Ensuite, le gel est sorti du bécher et placé entre deux feuilles papier filtre pendant 3 minutes. Ces opérations d'immersion et de repos sont effectuées, en tout 7 fois, de suite.

La capsule ainsi formée, est ensuite laissée, pendant 12 h dans 100 ml de la solution aqueuse de soude.

### 3-Caractérisation du nombre de membranes et de leur épaisseur :

La capsule est découpée en deux et les membranes sont séparées manuellement une à une. Dans cet exemple on obtient au final 7 membranes et un coeur gélifié.

L'épaisseur dés membranes est mesurée avec un pied à coulisse. Les membranes obtenues présentent toutes une épaisseur comprise entre 300 et 600 µm.

### Exemple 2

### Préparation d'une capsule avec 5 membranes successives et un coeur constitué d'une solution liquide de chitosane

### 1-Formation de l'hydrogel physique de chitosane :

Une solution aqueuse d'acide chlorhydrique est préparée en mélangeant 26,57 g d'eau distillée désionisée et 0,305 g d'acide chlorhydrique (RP). 0,54 g de chitosane de masse molaire 500 000 g.mol⁻¹ et de degré d'acétylation égal à 2,5% est solubilisé, sous agitation mécanique, dans la solution aqueuse d'acide chlorhydrique préparée précédemment. Apres 4 heures d'agitation, 26,57 g de 1,2-propanediol (RP) sont ajoutés.

Après homogénéisation sous agitation mécanique de ce mélange, on introduit 6 g exactement de cette solution dans chaque boite de Pétri, au nombre de 8 et présentant environ 3 cm de diamètre. Les 8 boites de pétri sont placées dans une l'étuve thermostatée au préalable à 50 °C, pendant 50 h, puis sorties.

### 2-Elaboration des capsules multimembranaires :

Une solution aqueuse de soude à 1 mol/L est préparée en mélangeant 40 g de soude dans un litre d'eau distillée désionisée.

Les gels sont démoulés des boites de pétri.

Un gel est alors plongé pendant 5 minutes dans un bécher contenant 100 ml de la solution aqueuse de soude préparée ci-dessus. Ensuite, le gel est sorti du bécher et placé entre deux feuilles papier filtre pendant 3 minutes. Ces opérations d'immersion et de repos sont effectuées, en tout 5 fois, de suite.

La capsule ainsi formée, est ensuite laissée, pendant 12 h dans 100 ml d'une solution aqueuse à pH compris entre 6,5 et 7.

### 3-Caractérisation du nombre de membranes et de leur épaisseur :

La capsule est découpée en deux et les membranes sont séparées manuellement une à une. Dans cet exemple, on obtient au final 5 membranes et un coeur constitué d'une solution de chitosane.

L'épaisseur des membranes est mesurée avec un pied à coulisse. Les membranes obtenues présentent toutes une épaisseur comprise entre 300 et 600 µm.

## Revendications

1. Procédé de préparation de capsules plurimembranaires formées d'une succession de membranes non solidaires et constituées d'un même polysaccharide ionisable, sous forme d'hydrogel physique, comprenant les étapes successives suivantes consistant à :
a) former un hydrogel physique d'un polysaccharide ionisable, sous forme cationique ou anionique, dans un moule de la forme adaptée à la forme souhaitée pour la capsule,
b) immerger l'hydrogel dans un bain alcalin dans le cas d'un polysaccharide cationique, ou acide dans le cas d'un polysaccharide anionique, pendant un temps d'immersion donné, puis le laisser reposer hors du bain pendant un temps de repos donné, de façon à obtenir une première membrane,
c) répéter l'étape b), autant de fois que de membranes supplémentaires souhaitées, pour former des membranes successives de l'extérieur vers l'intérieur de la capsule.

2. Procédé de préparation selon la revendication 1 **caractérisé en ce qu'**une fois le nombre de membranes souhaitées formées, la capsule plurimembranaire obtenue est rincée à l'eau, afin d'obtenir un pH neutre.

3. Procédé de préparation selon la revendication 1 ou 2 **caractérisé en ce qu'**à l'étape b) le repos est effectué dans un bain d'eau.

4. Procédé de préparation selon l'une des revendications 1 à 3 **caractérisé en ce que** la dernière étape c) est suivie d'une immersion de la capsule plurimembranaire obtenue dans un bain basique ou alcalin, pendant un temps suffisant pour obtenir une neutralisation du coeur gélifié de polysaccharide.

5. Procédé de préparation selon l'une des revendications 1 à 3 **caractérisé en ce que** la dernière étape c) est suivie d'une immersion de la capsule plurimembranaire obtenue dans l'eau, pendant un temps suffisant pour obtenir un coeur de polysaccharide sous la forme d'une solution visqueuse.

6. Procédé de préparation selon l'une des revendications 1 à 5 **caractérisé en ce que** la capsule plurimembranaire obtenue est vidée de son coeur.

7. Procédé de préparation selon la revendication 6 **caractérisé en ce que** le coeur de la capsule plurimembranaire obtenue est rempli d'un liquide ou gel d'intérêt.

8. Procédé de préparation selon l'une des revendications 1 à 7 **caractérisé en ce que** le polysaccharide est un polymère cationique.

9. Procédé de préparation selon la revendication 8 **caractérisé en ce que** la base utilisée pour préparer la solution alcaline présente un pKa supérieur ou égal à 8, de préférence compris dans la gamme allant de 11 à 14.

10. Procédé de préparation selon la revendication 8 ou 9, **caractérisé en ce que** la solution alcaline contient de la soude, de préférence à raison de plus de 0,1% en masse et préférentiellement de 2 à 4% en masse.

11. Procédé de préparation selon l'une des revendications 8 à 10, **caractérisé en ce que** le polymère cationique est du chitosane ou un dérivé du chitosane.

12. Procédé de préparation selon la revendication 11, **caractérisé en ce que** le chitosane présente une masse molaire supérieure à 10 000g/mol, de préférence comprise dans la gamme allant de 200 000 à 1 000 000g/mol.

13. Procédé de préparation selon la revendication 11 ou 12, **caractérisé en ce que** le chitosane présente un degré d'acétylation compris entre 0 et 70%, de préférence compris dans la gamme allant de 0 à 50%, et préférentiellement compris dans la gamme allant de 2 à 50 %.

14. Procédé de préparation selon l'une des revendications 11 à 13, **caractérisé en ce que** l'hydrogel formé à l'étape a) contient au moins 0,5% en masse de chitosane et préférentiellement de 2 à 5 % en masse de chitosane.

15. Capsule plurimembranaire formée d'une succession de membranes, non solidaires, pouvant glisser les unes par rapport aux autres, constituées d'un même polysaccharide ionisable, sous forme d'hydrogel physique.

16. Capsule plurimembranaire selon la revendication 15 **caractérisée en ce que** son coeur est constitué d'un hydrogel physique du polysaccharide ionisable.

17. Capsule plurimembranaire selon la revendication 15 **caractérisée en ce que** son coeur est vide.

18. Capsule plurimembranaire selon la revendication 15 **caractérisée en ce que** son coeur est rempli d'un liquide ou gel d'intérêt.

19. Capsule plurimembranaire selon l'une des revendications 15 à 18 **caractérisée en ce que** le polysaccharide est un polymère cationique.

20. Capsule plurimembranaire selon la revendication 19 **caractérisée en ce que** le polymère cationique est du chitosane ou un dérivé du chitosane.

21. Capsule plurimembranaire selon la revendication 20 **caractérisée en ce que** le chitosane présente une masse molaire supérieure à 10 000g/mol, de préférence comprise dans la gamme allant de 200 000 à 1 000 000g/mol.

22. Capsule plurimembranaire selon la revendication 20 ou 21 **caractérisée en ce que** le chitosane présente un degré d'acétylation compris entre 0 et 70%, de préférence compris dans la gamme allant de 0 à 50%, et préférentiellement compris dans la gamme allant de 2 à 50%.

## Claims

1. Process for the preparation of multimembrane capsules formed of a succession of membranes which are not integral with one another and which are composed of one and the same ionizable polysaccharide, in physical hydrogel form, comprising the following successive stages consisting in:
a) forming a physical hydrogel of an ionizable polysaccharide, in cationic or anionic form, in a mould having the form suited to the form desired for the capsule,
b) immersing the hydrogel in an alkaline bath, in the case of a cationic polysaccharide, or in an acid bath, in the case of an anionic polysaccharide, for a given immersion time and in then leaving it to rest, outside the bath, for a given resting time, so as to obtain a first membrane,
c) repeating stage b) as many times as there are additional membranes desired, in order to form successive membranes from the outside towards the inside of the capsule.

2. Preparation process according to Claim 1, **characterized in that**, once the number of desired membranes have been formed, the multimembrane capsule obtained is rinsed with water, in order to obtain a neutral pH.

3. Preparation process according to Claim 1 or 2, **characterized in that**, in stage b), the resting is carried out in a water bath.

4. Preparation process according to one of Claims 1 to 3, **characterized in that** the final stage c) is followed by an immersion of the multimembrane capsule obtained in a basic or alkaline bath, for a time sufficient to obtain neutralization of the gelled polysaccharide core.

5. Preparation process according to one of Claims 1 to 3, **characterized in that** the final stage c) is followed by immersion of the multimembrane capsule obtained in water, for a time sufficient to obtain a polysaccharide core in the form of a viscous solution.

6. Preparation process according to one of Claims 1 to 5, **characterized in that** the multimembrane capsule obtained is emptied of its core.

7. Preparation process according to Claim 6, **characterized in that** the core of the multimembrane capsule obtained is filled with an advantageous liquid or gel.

8. Preparation process according to one of Claims 1 to 7, **characterized in that** the polysaccharide is a cationic polymer.

9. Preparation process according to Claim 8, **characterized in that** the base used to prepare the alkaline solution exhibits a pKa of greater than or equal to 8, preferably within the range extending from 11 to 14.

10. Preparation process according to Claim 8 or 9, **characterized in that** the alkaline solution comprises sodium hydroxide, preferably in a proportion of more than 0.1% by weight and preferentially from 2 to 4% by weight.

11. Preparation process according to one of Claims 8 to 10, **characterized in that** the cationic polymer is chitosan or a chitosan derivative.

12. Preparation process according to Claim 11, **characterized in that** the chitosan exhibits a molar mass of greater than 10 000 g/mol, preferably within the range extending from 200 000 to 1 000 000 g/mol.

13. Preparation process according to Claim 11 or 12, **characterized in that** the chitosan exhibits a degree of acetylation of between 0 and 70%, preferably within the range extending from 0 to 50% and preferentially within the range extending from 2 to 50%.

14. Preparation process according to one of Claims 11 to 13, **characterized in that** the hydrogel formed in stage a) comprises at least 0.5% by weight of chitosan and preferentially from 2 to 5% by weight of chitosan.

15. Multimembrane capsule formed of a succession of membranes which are not integral with one another, which can slide with respect to one another and which are composed of one and the same ionizable polysaccharide, in physical hydrogel form.

16. Multimembrane capsule according to Claim 15, **characterized in that** its core is composed of a physical hydrogel of the ionizable polysaccharide.

17. Multimembrane capsule according to Claim 15, **characterized in that** its core is empty.

18. Multimembrane capsule according to Claim 15, **characterized in that** its core is filled with an advantageous liquid or gel.

19. Multimembrane capsule according to one of Claims 15 to 18, **characterized in that** the polysaccharide is a cationic polymer.

20. Multimembrane capsule according to Claim 19, **characterized in that** the cationic polymer is chitosan or a chitosan derivative.

21. Multimembrane capsule according to Claim 20, **characterized in that** the chitosan exhibits a molar mass of greater than 10 000 g/mol, preferably in the range extending from 200 000 to 1 000 000 g/mol.

22. Multimembrane capsule according to Claim 20 or 21, **characterized in that** the chitosan exhibits a degree of acetylation of between 0 and 70%, preferably within the range extending from 0 to 50% and preferentially within the range extending from 2 to 50%.

## Patentansprüche

1. Verfahren zur Herstellung von mehrere Membranen aufweisenden Kapseln, die von einer Folge von Membranen gebildet sind, welche nicht fest verbunden sind und aus einem gleichen ionisierbaren Polysaccharid, in Form von physikalischem Hydrogel bestehen, umfassend die folgenden aufeinanderfolgenden Schritte, die darin bestehen:
a) ein physikalisches Hydrogel aus einem ionisierbaren Polysaccharid, in kationischer oder anionischer Form, in einer Gießform, deren Form der für die Kapsel gewünschten Form angepaßt ist, zu bilden,
b) das Hydrogel in ein alkalisches Bad -im Fall eines kationischen Polysaccharids-oder in ein saures Bad -im Fall eines anionischen Polysaccharids-, für eine vorgegebene Eintauchzeit einzutauchen, es anschließend außerhalb des Bads für eine vorgegebene Ruhezeit ruhen zu lassen, um eine erste Membran zu erhalten,
c) Schritt b) so oft zu wiederholen wie zusätzliche Membranen gewünscht sind, um vom Äußeren zum Inneren der Kapsel aufeinanderfolgende Membranen auszubilden.

2. Herstellungsverfahren nach Anspruch 1, **dadurch gekennzeichnet, daß** sobald die Anzahl an gewünschten Membranen ausgebildet ist, die erhaltene mehrere Membranen aufweisende Kapsel mit Wasser gespült wird, um einen neutralen pH-Wert zu erhalten.

3. Herstellungsverfahren nach Anspruch 1 oder 2, **dadurch gekennzeichnet, daß** bei Schritt b) das Ruhen in einem Wasserbad erfolgt.

4. Herstellungsverfahren nach einem der Ansprüche 1 bis 3, **dadurch gekennzeichnet, daß** sich an den letzten Schritt c) ein Eintauchen der erhaltenen mehrere Membranen aufweisenden Kapsel in ein basisches oder alkalisches Bad, für eine zum Erreichen einer Neutralisierung des gelierten Polysaccharidkerns ausreichende Zeit anschließt.

5. Herstellungsverfahren nach einem der Ansprüche 1 bis 3, **dadurch gekennzeichnet, daß** sich an den letzten Schritt c) ein Eintauchen der erhaltenen mehrere Membranen aufweisenden Kapsel in Wasser, für eine zum Erhalten eines Polysaccharidkerns in Form einer viskosen Lösung ausreichende Zeit anschließt.

6. Herstellungsverfahren nach einem der Ansprüche 1 bis 5, **dadurch gekennzeichnet, daß** der Kern der erhaltenen mehrere Membranen aufweisenden Kapsel entleert wird.

7. Herstellungsverfahren nach Anspruch 6, **dadurch gekennzeichnet, daß** der Kern der erhaltenen mehrere Membranen aufweisenden Kapsel mit einer Flüssigkeit oder einem Gel von Interesse gefüllt wird.

8. Herstellungsverfahren nach einem der Ansprüche 1 bis 7, **dadurch gekennzeichnet, daß** das Polysaccharid ein kationisches Polymer ist.

9. Herstellungsverfahren nach Anspruch 8, **dadurch gekennzeichnet, daß** die für die Herstellung der alkalischen Lösung verwendete Base einen pKa-Wert von über oder gleich 8, vorzugsweise im Bereich zwischen 11 und 14 aufweist.

10. Herstellungsverfahren nach Anspruch 8 oder 9, **dadurch gekennzeichnet, daß** die alkalische Lösung Natriumkarbonat enthält, vorzugsweise in einem Anteil von mehr als 0,1 Masseprozent und vorzugsweise zwischen 2 und 4 Masseprozent.

11. Herstellungsverfahren nach einem der Ansprüche 8 bis 10, **dadurch gekennzeichnet, daß** das kationische Polymer Chitosan oder ein Chitosan-Derivat ist.

12. Herstellungsverfahren nach Anspruch 11, **dadurch gekennzeichnet, daß** das Chitosan eine molare Masse von über 10.000 g/mol, vorzugsweise im Bereich zwischen 200.000 und 1.000.000 g/mol aufweist.

13. Herstellungsverfahren nach Anspruch 11 oder 12, **dadurch gekennzeichnet, daß** das Chitosan einen Acetylierungsgrad zwischen 0 und 70 %, vorzugsweise im Bereich zwischen 0 und 50 % und vorzugsweise im Bereich zwischen 2 und 50 % aufweist.

14. Herstellungsverfahren nach einem der Ansprüche 11 bis 13, **dadurch gekennzeichnet, daß** das bei Schritt a) gebildete Hydrogel wenigstens 0,5 Masseprozent Chitosan und vorzugsweise 2 bis 5 Masseprozent Chitosan enthält.

15. Mehrere Membranen aufweisende Kapsel, gebildet von einer Folge von nicht fest verbundenen Membranen, die zueinander gleiten können, die aus einem gleichen ionisierbaren Polysaccharid, in Form von physikalischem Hydrogel bestehen.

16. Mehrere Membranen aufweisende Kapsel nach Anspruch 15, **dadurch gekennzeichnet, daß** ihr Kern aus einem physikalischen Hydrogel des ionisierbaren Polysaccharids besteht.

17. Mehrere Membranen aufweisende Kapsel nach Anspruch 15, **dadurch gekennzeichnet, daß** ihr Kern leer ist.

18. Mehrere Membranen aufweisende Kapsel nach Anspruch 15, **dadurch gekennzeichnet, daß** ihr Kern mit einer Flüssigkeit oder einem Gel von Interesse gefüllt ist.

19. Mehrere Membranen aufweisende Kapsel nach einem der Ansprüche 15 bis 18, **dadurch gekennzeichnet, daß** das Polysaccharid ein kationisches Polymer ist.

20. Mehrere Membranen aufweisende Kapsel nach Anspruch 19, **dadurch gekennzeichnet, daß** das kationische Polymer Chitosan oder ein Chitosan-Derivat ist.

21. Mehrere Membranen aufweisende Kapsel nach Anspruch 20, **dadurch gekennzeichnet, daß** das Chitosan eine molare Masse von über 10.000 g/mol, vorzugsweise im Bereich zwischen 200.000 und 1.000.000 g/mol aufweist.

22. Mehrere Membranen aufweisende Kapsel nach Anspruch 20 oder 21, **dadurch gekennzeichnet, daß** das Chitosan einen Acetylierungsgrad zwischen 0 und 70 %, vorzugsweise im Bereich zwischen 0 und 50 % und vorzugsweise im Bereich zwischen 2 und 50 % aufweist.
